(19)

Europäisches
Patentamt
European
Patent Office
Office européen
des brevets

(11)　**EP 4 102 594 A1**

(12)　**EUROPEAN PATENT APPLICATION**
published in accordance with Art. 153(4) EPC

(43) Date of publication:
**14.12.2022　Bulletin 2022/50**

(21) Application number: **21750798.7**

(22) Date of filing: **20.01.2021**

(51) International Patent Classification (IPC):
*H01M 4/131* (2010.01)　　*H01M 4/505* (2010.01)
*H01M 4/525* (2010.01)　　*H01M 4/62* (2006.01)
*H01M 10/052* (2010.01)　*H01M 10/0562* (2010.01)

(52) Cooperative Patent Classification (CPC):
**H01M 4/131; H01M 4/505; H01M 4/525;**
**H01M 4/62; H01M 10/052; H01M 10/0562;**
**Y02E 60/10**

(86) International application number:
**PCT/JP2021/001901**

(87) International publication number:
**WO 2021/157361 (12.08.2021 Gazette 2021/32)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority:　**05.02.2020　JP 2020017592**

(71) Applicants:
• **Panasonic Holdings Corporation**
　**Osaka 571-8501 (JP)**
• **TOYOTA JIDOSHA KABUSHIKI KAISHA**
　**Toyota-shi**
　**Aichi 471-8571 (JP)**

(72) Inventors:
• **SASAKI Izuru**
　**Osaka 540-6207 (JP)**
• **FUJINOKI Norihito**
　**Osaka 540-6207 (JP)**
• **MIYAZAKI Akinobu**
　**Osaka 540-6207 (JP)**
• **SHIOTANI Shinya**
　**Aichi 471-8571 (JP)**
• **SUGIYAMA Toru**
　**Aichi 471-8571 (JP)**

(74) Representative: **Eisenführ Speiser**
**Patentanwälte Rechtsanwälte PartGmbB**
**Postfach 31 02 60**
**80102 München (DE)**

(54)　**POSITIVE ELECTRODE MATERIAL AND BATTERY**

(57)　A positive electrode material 1000 of the present disclosure includes a positive electrode active material 101, a first solid electrolyte 102 including a sulfide solid electrolyte, and a second solid electrolyte 103 including a halide solid electrolyte. A proportion x of a volume of the second solid electrolyte 103 to a sum of a volume of the first solid electrolyte 102 and the volume of the second solid electrolyte 103 satisfies $20 \leq x \leq 95$ in percentage. The proportion x satisfies, for example, $35.2 \leq x \leq 76.5$ in percentage.

1000

FIG.1

EP 4 102 594 A1

**Description**

TECHNICAL FIELD

The present invention relates to a positive electrode material for a battery, and a battery.

BACKGROUND ART

Patent Literature 1 discloses an all-solid-state lithium battery including a positive electrode including a sulfide solid electrolyte.

Patent Literature 2 discloses an all-solid-state lithium battery including a halide solid electrolyte such as $Li_3YCl_6$ or $Li_3YBr_6$.

In a positive electrode including a solid electrolyte and a positive electrode active material, resistance (interfacial resistance) attributable to an interface between the solid electrolyte and the positive electrode active material can occur.

CITATION LIST

Patent Literature

Patent Literature 1: WO 2007/004590 A1
Patent Literature 2: WO 2018/025582 A1

SUMMARY OF INVENTION

Technical Problem

A positive electrode material capable of achieving a positive electrode having both a high thermal stability and a low interfacial resistance is required in conventional techniques.

Solution to Problem

A positive electrode material according to one aspect of the present disclosure includes:

a positive electrode active material;
a first solid electrolyte including a sulfide solid electrolyte; and
a second solid electrolyte including a halide solid electrolyte, wherein
a proportion x of a volume of the second solid electrolyte to a sum of a volume of the first solid electrolyte and the volume of the second solid electrolyte satisfies $20 \leq x \leq 95$ in percentage.

Advantageous Effects of Invention

The present disclosure can provide a positive electrode material capable of achieving a positive electrode having both a high thermal stability and a low interfacial resistance.

BRIEF DESCRIPTION OF DRAWINGS

FIG. 1 is a cross-sectional view showing a schematic configuration of a positive electrode material according to Embodiment 1.
FIG. 2 is a cross-sectional view showing a schematic configuration of a battery according to Embodiment 2.
FIG. 3 is a Nyquist diagram obtained by subjecting a battery of Comparative Example 3 to an AC impedance analysis.
FIG. 4 is a graph showing a relation between a proportion x, an interfacial resistance, and an amount of heat generation in each of Examples and Comparative Examples.

DESCRIPTION OF EMBODIMENTS

(Summary of one aspect according to the present disclosure)

A positive electrode material according to a first aspect of the present disclosure includes:

a positive electrode active material;
a first solid electrolyte including a sulfide solid electrolyte; and
a second solid electrolyte including a halide solid electrolyte, wherein
a proportion x of a volume of the second solid electrolyte to a sum of a volume of the first solid electrolyte and the volume of the second solid electrolyte satisfies $20 \leq x \leq 95$ in percentage.

The first aspect allows the positive electrode material to achieve a positive electrode having both a high thermal stability and a low interfacial resistance.

According to a second aspect of the present disclosure, for example, in the positive electrode material according to the first aspect, the proportion x may satisfy $35.2 \leq x \leq 76.5$ in percentage. The second aspect can achieve a positive electrode having a further improved thermal stability and a lower interfacial resistance.

According to a third aspect of the present disclosure, for example, in the positive electrode material according to the first or second aspect, the halide solid electrolyte may be represented by the following composition formula (1):

$$Li_\alpha M_\beta X_\gamma \ ...Formula\ (1)$$

where symbols $\alpha$, $\beta$, and $\gamma$ each may be a value greater than 0, a symbol M may include at least one selected from the group consisting of a metal element other than Li and a metalloid element, and a symbol X may include at least one selected from the group consisting of F, Cl, Br, and I.

According to a fourth aspect of the present disclosure, for example, in the positive electrode material according to the third aspect, the symbol M may include yttrium.

According to a fifth aspect of the present disclosure, for example, in the positive electrode material according to the third or fourth aspect, the symbols $\alpha$, $\beta$, and $\gamma$ may satisfy $2.5 \leq \alpha \leq 3$, $1 \leq \beta \leq 1.1$, and $\gamma = 6$.

The third to fifth aspects can further improve the ionic conductivity of the halide solid electrolyte.

According to a sixth aspect of the present disclosure, for example, in the positive electrode material according to any one of the first to fifth aspects, the positive electrode active material may include a lithium-containing transition metal composite oxide.

According to a seventh aspect of the present disclosure, for example, in the positive electrode material according to any one of the first to sixth aspects, the positive electrode active material may include lithium nickel cobalt manganese oxide.

The sixth or seventh aspect allows the positive electrode material to further improve the energy density of a battery and the charge and discharge efficiency of the battery.

A battery according to an eighth aspect of the present disclosure includes:

a positive electrode including the positive electrode material according to any one of the first to seventh aspects;
a negative electrode; and
an electrolyte layer disposed between the positive electrode and the negative electrode.

The eighth aspect allows the battery to achieve a high thermal stability and high output characteristics.

According to a ninth aspect of the present disclosure, for example, in the battery according to the eighth aspect, the electrolyte layer may include the same material as a material of the second solid electrolyte. The ninth aspect can further improve the thermal stability of the battery.

According to a tenth aspect of the present disclosure, for example, in the battery according to the eighth or ninth aspect, the electrolyte layer may include a halide solid electrolyte different from the halide solid electrolyte included in the second solid electrolyte. The tenth aspect can further improve the thermal stability of the battery.

According to an eleventh aspect of the present disclosure, for example, in the battery according to any one of the eighth to tenth aspects, the electrolyte layer may include a sulfide solid electrolyte. The eleventh aspect can improve the energy density of the battery.

Hereinafter, embodiments of the present disclosure will be described with reference to the drawings.

(Embodiment 1)

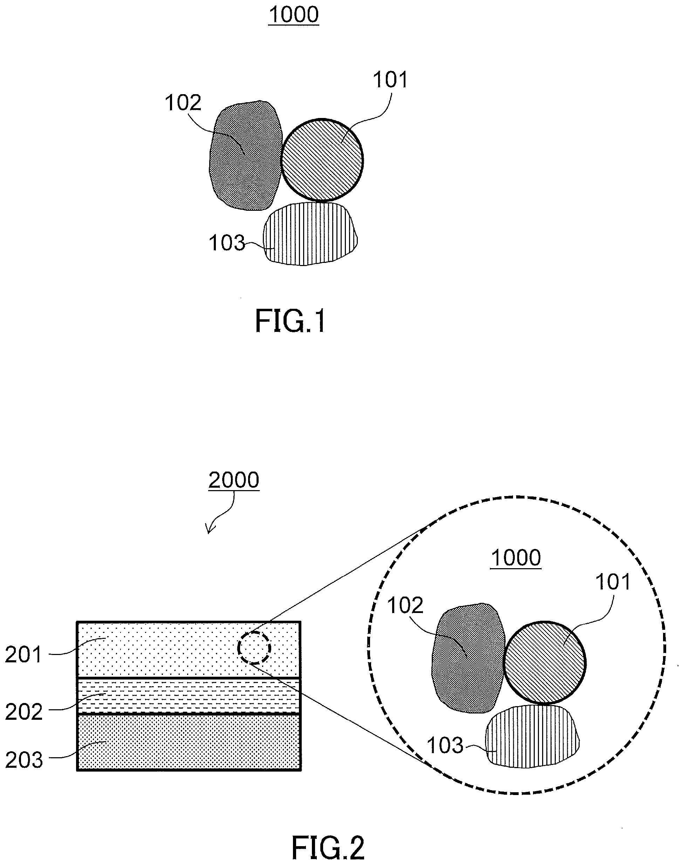

FIG. 1 is a cross-sectional view showing a schematic configuration of a positive electrode material 1000 according to Embodiment 1.

The positive electrode material 1000 includes a positive electrode active material 101, a first solid electrolyte 102, and a second solid electrolyte 103. The first solid electrolyte 102 includes a sulfide solid electrolyte. The first solid electrolyte 102 essentially consists of, for example, the sulfide solid electrolyte. The phrase "essentially consisting of" means exclusion of other components that alter essential characteristics of a material referred to. However, the first solid electrolyte 102 may include an impurity in addition to the sulfide solid electrolyte. The second solid electrolyte 103 includes a halide solid electrolyte. The second solid electrolyte 103 essentially consists of, for example, the halide solid electrolyte. However, the second solid electrolyte 103 may include an impurity in addition to the halide solid electrolyte. In the positive electrode material 1000, a proportion x of a volume of the second solid electrolyte 103 to a sum of a volume of the first solid electrolyte 102 and the volume of the second solid electrolyte 103 satisfies $20 \leq x \leq 95$ in percentage.

The above configuration allows the positive electrode material 1000 to have both a high thermal stability and a low interfacial resistance.

Patent Literature 1 discloses an all-solid-state lithium battery using a positive electrode including a sulfide solid electrolyte. Patent Literature 2 discloses an all-solid-state lithium battery including a halide solid electrolyte such as $Li_3YCl_6$ or $Li_3YBr_6$. Furthermore, Patent Literature 2 states that the positive electrode may include a sulfide solid electrolyte so as to improve the ionic conductivity. However, Patent Literatures 1 and 2 do not clearly disclose a positive electrode including both a halide solid electrolyte and a sulfide solid electrolyte. That is, Patent Literatures 1 and 2 neither state nor suggest a mixing proportion of a halide solid electrolyte to a sulfide solid electrolyte in a positive electrode material included in a positive electrode.

As a result of a detailed study, the present inventors have found that a positive electrode having both a high thermal stability and a low interfacial resistance can be achieved when a positive electrode material includes a first solid electrolyte including a sulfide solid electrolyte and a second solid electrolyte including a halide solid electrolyte and a proportion x of a volume of the second solid electrolyte to a sum of a volume of the first solid electrolyte and the volume of the second solid electrolyte satisfies $20 \leq x \leq 95$ in percentage.

The thermal stability of a positive electrode including a solid electrolyte is greatly affected by the thermal stability of the solid electrolyte itself and the reactivity with oxygen released from the solid electrolyte and the positive electrode. In the case of a positive electrode including a positive electrode active material including oxygen, battery charging makes the structure of the positive electrode active material so unstable that oxygen may be released from the positive electrode active material. In particular, when an excessive current flows through the battery due to a short-circuit or the like and thereby the battery generates heat, the positive electrode active material is heated and oxygen is likely to be released. In the case where the solid electrolyte included in the positive electrode reacts with oxygen to generate heat by oxidation, the positive electrode active material is further heated using the resulting heat of reaction as a heat source. This can accelerate the oxidation reaction of the solid electrolyte. As described above, it is conceivable that to improve the thermal stability of a positive electrode, a solid electrolyte having a high thermal stability and generating a smaller amount of heat by an oxidation reaction is used.

As a result of a study, the present inventors have newly found that compared to a sulfide solid electrolyte, a halide solid electrolyte not only has an excellent thermal stability by itself but also is poorly reactive with oxygen and generates a small amount of heat by an oxidation reaction. Therefore, in the case of a positive electrode material including a halide solid electrolyte and a sulfide solid electrolyte, the higher a volume proportion of the halide solid electrolyte is, the better thermal stability a positive electrode including the positive electrode material has. In the positive electrode material, a reaction with oxygen released from the sulfide solid electrolyte and the positive electrode active material can be sufficiently reduced when the proportion (proportion x) of the volume of the halide solid electrolyte to the sum of the volumes of these solid electrolytes is 20 vol% or more. Consequently, the amount of heat generated by an oxidation reaction of the sulfide solid electrolyte can be sufficiently decreased, and the thermal stability of the positive electrode can be improved. As described above, when the positive electrode material includes the halide solid electrolyte and the sulfide solid electrolyte, the proportion x may be 20 vol% or more.

To achieve a low interfacial resistance, the positive electrode active material and the solid electrolyte included in the positive electrode material need to be closely joined in the positive electrode. To produce a positive electrode of an all-solid-state battery, it is common to apply a load to a positive electrode material including a positive electrode active material and a solid electrolyte to join the positive electrode active material and the solid electrolyte. The solid electrolyte is easily joined to the positive electrode active material closely when having a low Young's modulus and easily changing its shape.

As a result of a study, the present inventors have newly found that a sulfide solid electrolyte has a lower Young's modulus and more easily changes its shape than a halide solid electrolyte. Because of this fact, when a positive electrode material includes a sulfide solid electrolyte, a low interfacial resistance can be achieved by closely joining the positive electrode active material and the sulfide solid electrolyte. That is, when a positive electrode material includes a sulfide solid electrolyte and a halide solid electrolyte, the higher the volume proportion of the sulfide solid electrolyte is, the lower interfacial resistance the positive electrode achieves. In other words, the lower the volume proportion of the halide solid electrolyte is, the lower interfacial resistance the positive electrode achieves. When the proportion (proportion x) of the volume of the halide solid electrolyte to the sum of the volumes of these solid electrolytes is 95 vol% or less in the positive electrode material, the area where the positive electrode active material and the sulfide solid electrolyte are in contact can be sufficiently secured. Consequently, the interfacial resistance in the positive electrode can be decreased. As described above, when the positive electrode material includes the halide solid electrolyte and the sulfide solid electrolyte, the proportion x may be 95 vol% or less.

In the positive electrode material 1000, the above proportion x may satisfy $30 \leq x \leq 95$ or $35.2 \leq x \leq 76.5$ in percentage. The proportion x may satisfy $48.4 \leq x \leq 84.9$ in percentage.

The above configuration further improves the thermal stability of a positive electrode including the positive electrode material 1000 and can achieve a lower interfacial resistance in the positive electrode.

The halide solid electrolyte included in the second solid electrolyte 103 may be represented by the following composition formula (1).

$$\text{Li}_\alpha \text{M}_\beta \text{X}_\gamma \text{ ...} \qquad \text{Formula (1)}$$

Here, symbols $\alpha$, $\beta$, and $\gamma$ are each a value greater than 0.

A symbol M includes at least one selected from the group consisting of a metal element other than Li and a metalloid element. The symbol M may be at least one element selected from the group consisting of a metal element other than Li and a metalloid element.

X includes at least one selected from the group consisting of F, Cl, Br, and I. X may be at least one selected from the group consisting of F, Cl, Br, and I.

The above configuration can further improve the ionic conductivity of the halide solid electrolyte. The output characteristics of a battery can further be improved thereby.

In the composition formula (1), the symbols $\alpha$, $\beta$, and $\gamma$ may satisfy $2.5 \leq \alpha \leq 3$, $1 \leq \beta \leq 1.1$, and $\gamma = 6$. The above configuration can further improve the ionic conductivity of the halide solid electrolyte. The output characteristics of a battery can further be improved thereby.

In the present disclosure, the term "metalloid elements" are B, Si, Ge, As, Sb, and Te.

In the present disclosure, the term "metal elements" are all the elements included in Groups 1 to 12 of the periodic table, except for hydrogen and all the elements included in Groups 13 to 16 of the periodic table, except for B, Si, Ge, As, Sb, Te, C, N, P, O, S, and Se.

That is, the terms "metalloid elements" and "metal element" each refer to a group of elements that can become cations when forming an inorganic compound with a halogen compound.

In the composition formula (1), the symbol M may include Y (yttrium). That is, the halide solid electrolyte may include Y as a metal element.

The above configuration can further improve the ionic conductivity of the halide solid electrolyte. The output characteristics of a battery can further be improved thereby.

The halide solid electrolyte including Y may be, for example, a compound represented by a composition formula $\text{Li}_a \text{Me}_b \text{Y}_c \text{X}_6$. Here, a, b, and c satisfy $a + mb + 3c = 6$ and $c > 0$. Me is at least one selected from the group consisting of metal elements, except for Li and Y, and metalloid elements. The symbol m is the valence of Me. X is at least one selected from the group consisting of F, Cl, Br, and I.

The element Me may be at least one selected from the group consisting of Mg, Ca, Sr, Ba, Zn, Sc, Al, Ga, Bi, Zr, Hf, Ti, Sn, Ta, and Nb.

The above configuration can further improve the ionic conductivity of the halide solid electrolyte.

The halide solid electrolyte included in the second solid electrolyte 103 may be represented by the following composition formula (A1).

$$\text{Li}_{6-3d} \text{Y}_d \text{X}_6 \text{ ...} \qquad \text{Formula (A1)}$$

In the composition formula (A1), X is at least one selected from the group consisting of F, Cl, Br, and I or two or more elements selected from the group consisting of F, Cl, Br, and I.

In the composition formula (A1), d satisfies $0 < d < 2$.

The above configuration can further improve the ionic conductivity of the halide solid electrolyte. The charge and discharge efficiency of a battery can thereby further be improved.

The halide solid electrolyte may be represented by the following composition formula (A2).

$$Li_3YX_6 \ldots \qquad \text{Formula (A2)}$$

In the composition formula (A2), X is at least one selected from the group consisting of F, Cl, Br, and I or two or more elements selected from the group consisting of F, Cl, Br, and I.

The above configuration can further improve the ionic conductivity of the halide solid electrolyte. The charge and discharge efficiency of a battery can thereby further be improved.

The halide solid electrolyte may be represented by the following composition formula (A3).

$$Li_{3-3\delta}Y_{1+\delta}Cl_6 \ldots \qquad \text{Formula (A3)}$$

In the composition formula (A3), $\delta$ satisfies $0 < \delta \le 0.15$.

The above configuration can further improve the ionic conductivity of the halide solid electrolyte. The charge and discharge efficiency of a battery can thereby further be improved.

The halide solid electrolyte may be represented by the following composition formula (A4).

$$L1_{3-3\delta}Y_{1+\delta}Br_6 \ldots \qquad \text{Formula (A4)}$$

In the composition formula (A4), $\delta$ satisfies $0 < \delta \le 0.25$.

The above configuration can further improve the ionic conductivity of the halide solid electrolyte. The charge and discharge efficiency of a battery can thereby further be improved.

The halide solid electrolyte may be represented by the following composition formula (A5).

$$Li_{3-3\delta+a}Y_{1+\delta-a}Me_aCl_{6-x-y}Br_xI_y \ldots \qquad \text{Formula (A5)}$$

In the composition formula (A5), Me includes at least one selected from the group consisting of Mg, Ca, Sr, Ba, and Zn. Me may be at least one selected from the group consisting of Mg, Ca, Sr, Ba, and Zn.

In the composition formula (A5), $\delta$, a, x, and y satisfy $-1 < \delta < 2$, $0 < a < 3$, $0 < (3-3\delta+a)$, $0 < (1+\delta-a)$, $0 \le x \le 6$, $0 \le y \le 6$, and $(x+y) \le 6$.

The above configuration can further improve the ionic conductivity of the halide solid electrolyte. The charge and discharge efficiency of a battery can thereby further be improved.

The halide solid electrolyte may be represented by the following composition formula (A6).

$$Li_{3-3\delta}Y_{1+\delta-a}Me_aCl_{6-x-y}Br_xI_y \ldots \qquad \text{Formula (A6)}$$

In the composition formula (A6), Me includes at least one selected from the group consisting of Al, Sc, Ga, and Bi. Me may be at least one selected from the group consisting of Al, Sc, Ga, and Bi.

In the composition formula (A6), $\delta$, a, x, and y satisfy $-1 < \delta < 1$, $0 < a < 2$, $0 < (1+\delta-a)$, $0 \le x \le 6$, $0 \le y \le 6$, and $(x+y) \le 6$.

The above configuration can further improve the ionic conductivity of the halide solid electrolyte. The charge and discharge efficiency of a battery can thereby further be improved.

The halide solid electrolyte may be represented by the following composition formula (A7).

$$L1_{3-3\delta-a}Y_{1+\delta-a}Me_aCl_{6-x-y}Br_xI_y \ldots \qquad \text{Formula (A7)}$$

In the composition formula (A7), Me includes at least one selected from the group consisting of Zr, Hf, and Ti. Me may be at least one selected from the group consisting of Zr, Hf, and Ti.

In the composition formula (A7), $\delta$, a, x, and y satisfy $-1 < \delta < 1$, $0 < a < 1.5$, $0 < (3-3\delta-a)$, $0 < (1+\delta-a)$, $0 \le x \le 6$, $0 \le y \le 6$, and $(x+y) \le 6$.

The above configuration can further improve the ionic conductivity of the halide solid electrolyte. The charge and discharge efficiency of a battery can thereby further be improved.

The halide solid electrolyte may be represented by the following composition formula (A8).

$$L1_{3-3\delta-2a}Y_{1+\delta-a}Me_aCl_{6-x-y}Br_xI_y \ldots \qquad \text{Formula (A8)}$$

In the composition formula (A8), Me includes at least one selected from the group consisting of Ta and Nb. Me may be at least one selected from the group consisting of Ta and Nb.

In the composition formula (A8), $\delta$, a, x, and y satisfy $-1 < \delta < 1$, $0 < a < 1.2$, $0 < (3-3\delta-2a)$, $0 < (1+\delta-a)$, $0 \le x \le 6$, $0 \le y \le 6$, and $(x+y) \le 6$.

The above configuration can further improve the ionic conductivity of the halide solid electrolyte. The charge and discharge efficiency of a battery can thereby further be improved.

As the halide solid electrolyte can be used, for example, $Li_3YX_6$, $Li_2MgX_4$, $Li_2FeX_4$, $Li(Al, Ga, In)X_4$, $Li_3(Al, Ga, In)X_6$, etc. In these materials, the element X is at least one selected from the group consisting of F, Cl, Br, and I. In the present disclosure, the expression "(Al, Ga, In)" represents at least one element selected from the group of elements in parentheses. In other words, the expression "(Al, Ga, In)" is synonymous with the expression "at least one selected from the group consisting of Al, Ga, and In". The same applies to other elements.

X (anion) included in the halide solid electrolyte includes at least one selected from the group consisting of F, Cl, Br, and I, and may further include oxygen. The halide solid electrolyte does not need to include sulfur.

The above configuration can further improve the ionic conductivity of the halide solid electrolyte. The charge and discharge efficiency of a battery can thereby further be improved.

The sulfide solid electrolyte included in the first solid electrolyte 102 is not particularly limited as long as being a solid electrolyte including sulfur, and $Li_2S-P_2S_5$, $Li_2S-SiS_2$, $Li_2S-B_2S_3$, $Li_2S-GeS_2$, $Li_{3.25}Ge_{0.25}P_{0.75}S_4$, $Li_{10}GeP_2S_{12}$, or the like can be used as the sulfide solid electrolyte included in the first solid electrolyte 102. The sulfide solid electrolyte may be a solid electrolyte having an Argyrodite structure typified by $Li_6PS_5Cl$, $Li_6PS_5Br$, and $Li_6PS_5I$. To these sulfide solid electrolytes may be added $LiX$, $Li_2O$, $MO_q$, $Li_pMO_q$, or the like. Here, X is at least one selected from the group consisting of F, Cl, Br, and I. M is at least one selected from the group consisting of P, Si, Ge, B, Al, Ga, In, Fe, and Zn. The symbols p and q are each a natural number.

The above configuration can further improve the ionic conductivity of the sulfide solid electrolyte. The charge and discharge efficiency of a battery can thereby further be improved.

The positive electrode active material 101 includes, for example, a material having properties of occluding and releasing metal ions (e.g., lithium ions). As the positive electrode active material 101 can be used a lithium-containing transition metal oxide, a transition metal fluoride, a polyanion material, a fluorinated polyanion material, a transition metal sulfide, a transition metal oxysulfide, a transition metal oxynitride, etc. In particular, when a lithium-containing transition metal oxide is used as the positive electrode active material 101, it is possible to reduce the manufacturing cost and to improve the average discharge voltage.

The positive electrode active material 101 may include a lithium nickel cobalt manganese oxide as the lithium-containing transition metal oxide. The positive electrode active material 101 may be lithium nickel cobalt manganese oxide. For example, the positive electrode active material 101 may be $Li(NiCoMn)O_2$. A structure of the lithium-containing transition metal oxide such as $Li(NiCoMn)O_2$ is likely to become unstable particularly when a battery is in a charged state. The lithium-containing transition metal oxide is therefore likely to release oxygen. On the other hand, the positive electrode material 1000 of the present embodiment includes the halide solid electrolyte. As described above, the halide solid electrolyte not only has an excellent thermal stability by itself but also is poorly reactive with oxygen. Therefore, even when the positive electrode material 1000 includes the lithium-containing transition metal oxide as the positive electrode active material 101, the positive electrode material 1000 of the present embodiment can effectively improve the thermal stability of a positive electrode.

The above configuration allows the positive electrode material 1000 to further improve the energy density of a battery and the charge and discharge efficiency of the battery.

The shapes of the positive electrode active material 101, the first solid electrolyte 102, and the second solid electrolyte 103 are not particularly limited, and the positive electrode active material 101, the first solid electrolyte 102, and the second solid electrolyte 103 are, for example, in the shape of a particle. In the present disclosure, the term "the shape of a particle" includes the shapes of a needle, a flake, a sphere, and an elliptical sphere.

When the first solid electrolyte 102 and the second solid electrolyte 103 are in the shape of a particle (for example, in the shape of a sphere), the first solid electrolyte 102 and the second solid electrolyte 103 may have a median diameter of 100 $\mu$m or less. When the median diameters of the first solid electrolyte 102 and the second solid electrolyte 103 are 100 $\mu$m or less, the positive electrode active material 101, the first solid electrolyte 102, and the second solid electrolyte 103 can be in a favorable dispersion state in the positive electrode material 1000. This improves the charge and discharge characteristics of a battery. The median diameters of the first solid electrolyte 102 and the second solid electrolyte 103 may be 10 $\mu$m or less.

The above configuration allows the positive electrode active material 101, the first solid electrolyte 102, and the second solid electrolyte 103 to be in a favorable dispersion state in the positive electrode material 1000.

Herein, the median diameter of particles means the particle diameter (d50) at a cumulative volume percentage of 50% in a volume-based particle size distribution measured by a laser diffraction-scattering method.

The median diameters of the first solid electrolyte 102 and the second solid electrolyte 103 may be smaller than the median diameter of the positive electrode active material 101.

The above configuration allows the positive electrode active material 101, the first solid electrolyte 102, and the second solid electrolyte 103 to be in a more favorable dispersion state in the positive electrode material 1000.

The median diameter of the positive electrode active material 101 may be 0.1 $\mu$m or more and 100 $\mu$m or less. When the median diameter of the positive electrode active material 101 is 0.1 $\mu$m or more, the positive electrode active material 101, the first solid electrolyte 102, and the second solid electrolyte 103 can be in a favorable dispersion state in the positive electrode material 1000. This improves the charge and discharge efficiency of a battery. When the median diameter of the positive electrode active material 101 is 100 μm or less, the diffusion rate of lithium in the positive electrode active material 101 increases. This allows a battery to operate at a high power.

The positive electrode material 1000 may include a plurality of particles of the first solid electrolyte 102, a plurality of particles of the second solid electrolyte 103, and a plurality of particles of the positive electrode active material 101.

In the positive electrode material 1000, the amount of the particles of the first solid electrolyte 102, the particles of the second solid electrolyte 103, and the particles of the positive electrode active material 101 may be the same or different from each other. In the positive electrode material 1000, a volume proportion "v1: 100 - v1" of the positive electrode active material 101 to the first solid electrolyte 102 and the second solid electrolyte 103 may satisfy $30 \leq v1 \leq 95$. The symbol v1 represents a volume proportion of the positive electrode active material 101, the volume proportion being determined when the total volume of the positive electrode active material 101, the first solid electrolyte 102, and the second solid electrolyte 103 included in the positive electrode material 1000 is defined as 100. When v1 satisfies $30 \leq v1$, a sufficient energy density of a battery can be achieved. When v1 satisfies $v1 \leq 95$, a battery can operate at a high power.

The positive electrode material 1000 can achieve a positive electrode having a low interfacial resistance. The interfacial resistance in the positive electrode including the positive electrode material 1000 may be 60 Ω or less, 50 Ω or less, or 40 Ω or less. The lower limit of the interfacial resistance is not particularly limited, and may be 15 Ω or 25 Ω. The interfacial resistance in the positive electrode can be measured, for example, by the following method. First, a battery including the positive electrode including the positive electrode material 1000 is prepared. This battery is charged to a quantity of electricity of 100 mAh (100 mAh/g) per gram of the positive electrode active material at a constant current. Next, the charged battery is subjected to an AC impedance analysis. A semicircular-arc-shaped waveform in the resulting Nyquist diagram is attributed to an interfacial resistance in the positive electrode and a resistance of a negative electrode, and a fitting analysis is performed. An interfacial resistance value can be calculated thereby.

The positive electrode material 1000 can achieve a positive electrode having a high thermal stability. The thermal stability of the positive electrode including the positive electrode material 1000 can be evaluated, for example, in terms of the amount of heat generation measured by a heat generation test. The heat generation test can be performed, for example, by the following method. First, the first solid electrolyte 102 and the second solid electrolyte 103 configured to be included in the positive electrode material 1000 are mixed with a positive electrode mixture in a charged state to obtain a mixture. The positive electrode mixture includes, for example, a positive electrode active material, a conductive additive, and a binder. The positive electrode mixture has been charged, for example, to a quantity of electricity of 240 mAh (240 mAh/g) per gram of the positive electrode active material. A volume proportion of the positive electrode active material included in the positive electrode mixture to the solid electrolytes 102 and 103 is, for example, 70.0: 30.0. Next, the amount of heat generation of the mixture is measured using a commercially-available differential scanning calorimeter. In the amount of heat generation measurement, a temperature increase rate is set at 10°C/min, and a scanning temperature range is set to ordinary temperature (20°C) to 500°C. The resulting amount of heat generation is divided by the weight of the mixture to calculate an amount of heat generation (mJ/mg) per unit weight.

The amount of heat generation measured in the above heat generation test may be 2000 mJ/mg or less, 1800 mJ/mg or less, and 1500 mJ/mg or less. The lower limit of the amount of heat generation is, for example, but not particularly limited to, 800 mJ/mg.

<Halide solid electrolyte manufacturing method>

The halide solid electrolyte included in the second solid electrolyte 103 can be manufactured, for example, by the following method.

First, raw material powders of a binary halide is prepared at a blending ratio appropriate to an intended composition. The binary halide refers to a compound formed of two elements including a halogen element. For example, to produce $Li_3YCl_6$, a raw material powder LiCl and a raw material powder $YCl_3$ are prepared at a molar ratio of 3: 1.

The elements "M", "Me", and "X" in the above composition formulae are determined by the types of the raw material powders. The values of "α", "β", "γ", "d", "δ", "a", "x", and "y" in the above composition formulae are determined by the types of the raw material powders, the blending ratio, and a synthesis process.

The raw material powders are sufficiently mixed and pulverized, and then reacted together by a mechanochemical milling method. Alternatively, the raw material powders may be sufficiently mixed and pulverized, and then sintered under vacuum.

A halide solid electrolyte including a crystal phase having any of the above compositions is obtained by these methods.

The structure of the crystal phase (crystal structure) of the halide solid electrolyte is determined in accordance with the reaction method and reaction conditions of the raw material powders.

(Embodiment 2)

Embodiment 2 will be described below. The description overlapping that in Embodiment 1 above will be omitted as appropriate.

FIG. 2 is a cross-sectional view showing a schematic configuration of a battery 2000 of Embodiment 2.

The battery 2000 includes a positive electrode 201, an electrolyte layer 202, and a negative electrode 203.

The positive electrode 201 includes the positive electrode material 1000 of Embodiment 1 described above.

The electrolyte layer 202 is disposed between the positive electrode 201 and the negative electrode 203.

The above configuration can improve the charge and discharge efficiency of the battery 2000.

The thickness of the positive electrode 201 may be 10 $\mu$m or more and 500 $\mu$m or less. When the thickness of the positive electrode 201 is 10 $\mu$m or more, a sufficient energy density of the battery can be achieved. When the thickness of the positive electrode 201 is 500 $\mu$m or less, the battery can operate at a high power. That is, an appropriate adjustment of the thickness of the positive electrode 201 can achieve a sufficient energy density of the battery and allows the battery to operate at a high power.

The electrolyte layer 202 is a layer including an electrolyte. The electrolyte included in the electrolyte layer 202 is, for example, a solid electrolyte. That is, the electrolyte layer 202 may be a solid electrolyte layer. Herein, the solid electrolyte included in the electrolyte layer 202 may be called "third solid electrolyte".

Examples of the third solid electrolyte included in the electrolyte layer 202 include the examples of the material of the second solid electrolyte 103 described in Embodiment 1. That is, the electrolyte layer 202 may include the same material as the material of the second solid electrolyte 103. The electrolyte layer 202 may include the halide solid electrolyte described in Embodiment 1.

The above configuration can further improve the thermal stability of the battery.

The third solid electrolyte included in the electrolyte layer 202 may be a halide solid electrolyte having composition different from that of the halide solid electrolyte included in the second solid electrolyte 103. That is, the electrolyte layer 202 may include a halide solid electrolyte different from the halide solid electrolyte included in the second solid electrolyte 103.

The above configuration can improve the thermal stability of the battery.

The halide solid electrolyte included in the electrolyte layer 202 may include Y as a metal element.

The above configuration can further improve the power density of the battery and the charge and discharge efficiency of the battery.

A sulfide solid electrolyte may be used as the third solid electrolyte included in the electrolyte layer 202. That is, the electrolyte layer 202 may include a sulfide solid electrolyte.

According to the above configuration, the electrolyte layer 202 includes the sulfide solid electrolyte, which has a high reduction stability, and therefore a low-electric potential material such as graphite or a metal lithium can be used as a negative electrode material. This can improve the output characteristics of the battery and the energy density of the battery.

In the electrolyte layer 202, the sulfide solid electrolyte may be the sulfide solid electrolyte described in Embodiment 1. That is, the electrolyte layer 202 may include the same material as the material of the first solid electrolyte 102. The above configuration can improve the output characteristics of the battery and the energy density of the battery.

An oxide solid electrolyte, a polymer solid electrolyte, a complex hydride solid electrolyte, or the like may be used as the third solid electrolyte included in the electrolyte layer 202.

As the oxide solid electrolyte can be used, for example, a NASICON solid electrolyte typified by $LiTi_2(PO_4)_3$ and element-substituted substances thereof; a $(LaLi)TiO_3$-based perovskite solid electrolyte; a LISICON solid electrolyte typified by $Li_{14}ZnGe_4O_{16}$, $Li_4SiO_4$, and $LiGeO_4$ and element-substituted substances thereof; a garnet solid electrolyte typified by $Li_7La_3Zr_2O_{12}$ and element-substituted substances thereof; $Li_3PO_4$ and N-substituted substances thereof; or a glass or glass ceramic that includes a Li-B-O compound such as $LiBO_2$ or $Li_3BO_3$ as a base and to which $Li_2SO_4$, $Li_2CO_3$, or the like has been added.

For example, a compound of a polymer compound and a lithium salt can be used as the polymer solid electrolyte. The polymer compound may have an ethylene oxide structure. A polymer compound having an ethylene oxide structure can contain a large amount of a lithium salt. Therefore, the ionic conductivity of the electrolyte layer 202 can be further increased. $LiPF_6$, $LiBF_4$, $LiSbF_6$, $LiAsF_6$, $LiSO_3CF_3$, $LiN(SO_2CF_3)_2$, $LiN(SO_2C_2F_5)_2$, $LiN(SO_2CF_3)(SO_2C_4F_9)$, $LiC(SO_2CF_3)_3$, or the like can be used as the lithium salt. One lithium salt selected from the exemplified lithium salts can be used alone. A mixture of two or more lithium salts selected from the exemplified lithium salts may be used.

For example, $LiBH_4$-LiI or $LiBH_4$-$P_2S_5$ can be used as the complex hydride solid electrolyte.

The electrolyte layer 202 may include the third solid electrolyte as its main component. That is, the electrolyte layer 202 may include the third solid electrolyte, for example, at a weight proportion of 50 weight% or more to the entire

EP 4 102 594 A1

electrolyte layer 202.

The above configuration can further improve the charge and discharge characteristics of the battery.

The electrolyte layer 202 may include the third solid electrolyte, for example, at a weight proportion of 70 weight% or more to the entire electrolyte layer 202.

The above configuration can further improve the charge and discharge characteristics of the battery.

The electrolyte layer 202 includes the third solid electrolyte as its main component, and may further include inevitable impurities, a starting material used for synthesis of the third solid electrolyte, a by-product, a decomposition product, etc.

The electrolyte layer 202 may include the third solid electrolyte, for example, at a weight proportion of 100 weight% to the entire electrolyte layer 202, except for inevitably incorporated impurities.

The above configuration can further improve the charge and discharge characteristics of the battery.

As described above, the electrolyte layer 202 may essentially consist of the third solid electrolyte.

The electrolyte layer 202 may include two or more of the materials listed as the third solid electrolyte. For example, the electrolyte layer 202 may include the halide solid electrolyte and the sulfide solid electrolyte.

The electrolyte layer 202 may have a multilayer structure in which two layers having different compositions are laminated. For example, in the electrolyte layer 202, a layer including a halide solid electrolyte and a layer including a sulfide solid electrolyte may be laminated. In particular, in the electrolyte layer 202, a layer including a halide solid electrolyte may be disposed in contact with the positive electrode 201, while a layer including a sulfide solid electrolyte may be disposed in contact with the negative electrode 203. These structures can improve the thermal stability, the output characteristics, and the energy density of the battery.

The thickness of the electrolyte layer 202 may be 1 $\mu$m or more and 300 $\mu$m or less. When the thickness of the electrolyte layer 202 is 1 $\mu$m or more, a short-circuit between the positive electrode 201 and the negative electrode 203 is less likely to happen. When the thickness of the electrolyte layer 202 is 300 $\mu$m or less, a battery can operate at a high power.

The negative electrode 203 includes a material having properties of occluding and releasing metal ions (e.g., lithium ions). The negative electrode 203 includes, for example, a negative electrode active material.

A metal material, a carbon material, an oxide, a nitride, a tin compound, a silicon compound, or the like can be used as the negative electrode active material. The metal material may be an elemental metal. The metal material may be an alloy. Examples of the metal material include lithium metal and a lithium alloy. Examples of the carbon material include natural graphite, coke, semi-graphitized carbon, carbon fibers, spherical carbon, artificial graphite, and amorphous carbon. In terms of the capacity density of the battery, silicon (Si), tin (Sn), a silicon compound, or a tin compound can be used.

The negative electrode 203 may include a solid electrolyte. The solid electrolyte exemplified as the material of the electrolyte layer 202 may be used as the solid electrolyte included in the negative electrode 203. The above configuration can improve the lithium ion conductivity inside the negative electrode 203 and allows the battery to operate at a high power.

The shape of the negative electrode active material is not particularly limited, and the negative electrode active material is, for example, in the shape of a particle. When the negative electrode active material is in the shape of a particle (for example, in the shape of a sphere), the negative electrode active material may have a median diameter of 0.1 $\mu$m or more and 100 $\mu$m or less. When the median diameter of the negative electrode active material is 0.1 $\mu$m or more, the negative electrode active material and the solid electrolyte can be in a favorable dispersion state in the negative electrode 203. This improves the charge and discharge characteristics of the battery. When the median diameter of the negative electrode active material is 100 $\mu$m or less, the diffusion rate of lithium in the negative electrode active material increases. This allows the battery to operate at a high power.

In the negative electrode 203, the median diameter of the negative electrode active material may be greater than the median diameter of the solid electrolyte. This allows the negative electrode active material and the solid electrolyte to be in a more favorable dispersion state.

In the negative electrode 203, a volume proportion "v2: 100 - v2" of the negative electrode active material to the solid electrolyte may satisfy $30 \leq v2 \leq 95$. The symbol v2 represents a volume proportion of the negative electrode active material, the volume proportion being determined when the total volume of the negative electrode active material and the solid electrolyte included in the negative electrode 203 is defined as 100. When v2 satisfies $30 \leq v2$, a sufficient energy density of the battery can be achieved. When the symbol v2 satisfies $v2 \leq 95$, the battery can operate at a high power.

The thickness of the negative electrode 203 may be 10 $\mu$m or more and 500 $\mu$m or less. When the thickness of the negative electrode 203 is 10 $\mu$m or more, a sufficient energy density of the battery can be achieved. When the thickness of the negative electrode 203 is 500 $\mu$m or less, the battery can operate at a high power.

At least one selected from the group consisting of the positive electrode 201, the electrolyte layer 202, and the negative electrode 203 may include a binder to improve the adhesion between the particles. The binder is used, for example, to improve the binding properties of the material of an electrode. Examples of the binder include polyvinylidene fluoride, polytetrafluoroethylene, polyethylene, polypropylene, aramid resin, polyamide, polyimide, polyamide-imide, polyacrylonitrile, polyacrylic acid, polyacrylic acid methyl ester, polyacrylic acid ethyl ester, polyacrylic acid hexyl ester, polymethacrylic acid, polymethacrylic acid methyl ester, polymethacrylic acid ethyl ester, polymethacrylic acid hexyl ester, polyvinyl acetate, polyvinylpyrrolidone, polyether, polyethersulfone, hexafluoropolypropylene, styrene-butadiene rubber, and carboxymethylcellulose. As the binder can also be used a copolymer of two or more materials selected from the group consisting of tetrafluoroethylene, hexafluoroethylene, hexafluoropropylene, perfluoroalkyl vinyl ether, vinylidene fluoride, chlorotrifluoroethylene, ethylene, propylene, pentafluoropropylene, fluoromethyl vinyl ether, acrylic acid, and hexadiene. A mixture of two or more materials selected from these materials may also be used as the binder.

At least one selected from the positive electrode 201 and the negative electrode 203 may include a conductive additive to improve the electronic conductivity. As the conductive additive can be used, for example, graphites such as natural graphite and artificial graphite; carbon blacks such as acetylene black and ketjen black; conductive fibers such as a carbon fiber and a metal fiber; metal powders such as a fluorinated carbon powder and an aluminum powder; conductive whiskers such as a zinc oxide whisker and a potassium titanate whisker; conductive metal oxides such as titanium oxide; and conductive polymer compounds such as polyaniline, polypyrrole, and polythiophene. Using a conductive carbon additive as the conductive additive can seek cost reduction.

The positive electrode active material 101 or the negative electrode active material may include a coating layer to decrease the interfacial resistance. An active material having a coating layer can be produced, for example, by coating, with a coating material, a particle A formed of a material having properties of occluding and releasing metal ions. In the positive electrode active material 101, only a portion of the surface of the particle A may be coated with the coating layer, or the entire surface of the particle A may be coated with the coating layer. In the same manner, in the negative electrode active material, only a portion of the surface of the particle A may be coated with the coating layer, or the entire surface of the particle A may be coated with the coating layer.

A solid electrolyte such as sulfide solid electrolyte, an oxide solid electrolyte, a halide solid electrolyte, a polymer solid electrolyte, or a complex hydride solid electrolyte can be used as the coating layer. The coating layer may include an oxide solid electrolyte. An oxide solid electrolyte has an excellent high-potential stability. When the coating layer includes an oxide solid electrolyte, the charge and discharge efficiency of the battery is improved.

Examples of the oxide solid electrolyte that can be used as the coating layer include a Li-Nb-O compound such as $LiNbO_3$, a Li-B-O compound such as $LiBO_2$ or $Li_3BO_3$, a Li-Al-O compound such as $LiAlO_2$, a Li-Si-O compound such as $Li_4SiO_4$, a Li-Ti-O compound such as $Li_2SO_4$ or $Li_4Ti_5O_{12}$, a Li-Zr-O compound such as $Li_2ZrO_3$, a Li-MoO compound such as $Li_2MoO_3$, a Li-V-O compound such as $LiV_2O_5$, a Li-W-O compound such as $Li_2WO_4$, and a Li-P-O compound such as $Li_3PO_4$.

The coating layer has a relatively low electron conductivity in some cases. Therefore, when the positive electrode active material 101 includes the coating layer, a resistance against an electron can increase in the positive electrode active material 101. In this case, dense presence of a plurality of the positive electrode active materials 101 in the positive electrode 201 can decrease the resistance against an electron in the positive electrode active material 101. The positive electrode material 1000 in Embodiment 1 described above includes a sulfide solid electrolyte. As described above, a sulfide solid electrolyte has a low Young's modulus and easily changes its shape. Therefore, even in the case where the positive electrode active material 101 includes the coating layer, application of a load to the positive electrode material 1000 for production of the positive electrode 201 sufficiently compresses the sulfide solid electrolyte to change the shape thereof. This allows the plurality of the positive electrode active materials 101 to be densely present in the positive electrode 201. That is, the resistance against an electron in the positive electrode 201 is decreased and good battery properties can be achieved.

The shape of the battery 2000 is, for example, a coin type, a cylindrical type, a prismatic type, a sheet type, a button type, a flat type, or a layer-built type.

EXAMPLES

Hereinafter, the details of the present disclosure will be described with reference to examples and comparative examples. The present disclosure is not limited to the following examples.

[Production of first solid electrolyte]

In an argon glove box with a dew point of -60°C or less, $Li_2S$ and $P_2S_5$ were weighed as raw material powders at a molar ratio of $Li_2S$: $P_2S_5$ = 75: 25. These raw material powders were pulverized for mixing in a mortar. The resulting mixture was then subjected to a milling process at 510 rpm for 10 hours using a planetary ball mill (Type P-7 manufactured by Fritsch GmbH). A glassy solid electrolyte was obtained in this manner. The solid electrolyte was then heat-treated at 270°C in an inert atmosphere for 2 hours. $Li_2S$-$P_2S_5$, which is a first solid electrolyte, in the form of a glass ceramic was thereby obtained.

[Production of second solid electrolyte]

In an argon glove box with a dew point of -60°C or less, LiCl and $YCl_3$ were weighed as raw material powders at a molar ratio of LiCl: $YCl_3$ = 3: 1. These raw material powders were mixed to obtain a mixture. The mixture was then subjected to a milling process at 600 rpm for 25 hours using a planetary ball mill (Type P-7 manufactured by Fritsch GmbH). A $Li_3YCl_6$ powder, which is a second solid electrolyte, was thereby obtained.

[Production of charged positive electrode mixture]

In a dry air with a dew point of -40°C or less, $Li(NiCoMn)O_2$ (hereinafter referred to as "NCM") being a positive electrode active material, carbon black (hereinafter referred to as "CB") being a conductive additive, and polyvinylidene fluoride (hereinafter referred to as "PVDF") being a binder dissolved in N-methyl-2-pyrrolidone (hereinafter referred to as "NMP") were weighed at a weight ratio of NCM: CB: PVDF = 100: 1.25: 1. An appropriate amount of NMP was further added to the mixture of these raw materials. The resulting mixture was kneaded at 1600 rpm for 5 minutes using a planetary centrifugal mixer (ARE-310 manufactured by THINKY CORPORATION) to produce a positive electrode slurry. Next, the positive electrode slurry was applied to a current collector formed of aluminum foil. Next, the positive electrode slurry was dried under vacuum at 100°C for 1 hour. A given pressure was applied to the resulting current collector using a roll press machine to obtain a positive electrode plate.

Next, a laminate cell was produced using the positive electrode plate, a polyethylene separator, metal lithium, and an electrolyte solution. A mixed solvent that contains ethylene carbonate-ethyl methyl carbonate and in which $LiPF_6$ was dissolved was used as the electrolyte solution. The $LiPF_6$ concentration in the electrolyte solution was 1 mol/L. The produced laminate cell was charged to a quantity of electricity of 240 mAh (240 mAh/g) per gram of the positive electrode active material. Then, the positive electrode plate was taken out of the laminate cell and was washed with a diethyl carbonate solvent. Next, the positive electrode plate was dried under vacuum at room temperature for 1 hour. The current collector was peeled off from the dried positive electrode plate to obtain a charged positive electrode mixture.

[Production of positive electrode active material having coating layer]

In an argon glove box, 5.95 g of lithium ethoxide (manufactured by KOJUNDO CHEMICAL LABORATORY CO., LTD.) and 36.43 g of pentaethoxy niobium (manufactured by KOJUNDO CHEMICAL LABORATORY CO., LTD.) were dissolved in 500 mL of super dehydrated ethanol (manufactured by Wako Pure Chemical Industries, Ltd.) to produce a solution containing a coating material. Next, the solution containing the coating material and NCM were mixed using a tumbling fluidized bed granulation coating apparatus (FD-MP-01E manufactured by Powrex Corporation). In this case, the amount of NCM added was 1 kg. The stirring rate was 400 rpm. The rate of supplying the solution containing the coating material was 6.59 g/min. The treated NCM powder was placed in an alumina crucible and was taken out in an air atmosphere. The powder was subjected to a heat treatment in an air atmosphere at 300°C for 1 hour. The heat-treated powder was pulverized again in an agate mortar to obtain a positive electrode active material having a coating layer. The composition of the coating layer was $LiNbO_3$.

<Example 1>

[Production of positive electrode material]

In an argon glove box, the positive electrode active material having the coating layer, $Li_3YCl_6$, and $Li_2S$-$P_2S_5$ were weighed at a volume proportion of 70.0: 10.6: 19.4. These were mixed in an agate mortar to produce a positive electrode material. In this positive electrode material, the proportion x of the volume of the second solid electrolyte ($Li_3YCl_6$) to the sum of the volume of the first solid electrolyte ($Li_2S$-$P_2S_5$) and the volume of the second solid electrolyte was 35.2 vol%.

[Production of secondary battery]

A secondary battery including the above positive electrode material was produced by the following steps.

First, 80 mg of $Li_2S$-$P_2S_5$ was placed in an insulating outer cylinder. This $Li_2S$-$P_2S_5$ was pressure-molded by applying a pressure of 80 MPa thereto to obtain a solid electrolyte layer. The positive electrode material was placed on the solid electrolyte layer. In this case, the weight of the positive electrode active material per unit area was 19.8 mg/cm$^2$. Then, the positive electrode material was pressure-molded by applying a pressure of 360 MPa thereto to obtain a positive electrode.

Next, metal In (thickness: 200 $\mu$m) was placed on a surface of the solid electrolyte layer, the surface being opposite to a surface in contact with the positive electrode. The metal In was pressure-molded by applying a pressure of 80 MPa thereto to obtain a laminate including the positive electrode, the solid electrolyte layer, and a negative electrode. Then, a current collector made of stainless steel was disposed on each of the positive electrode and the negative electrode, and a current collector lead was provided to each of these current collectors. Next, the inside of the insulating outer cylinder was blocked for sealing from the outside atmosphere with an insulating ferrule to produce a battery of Example 1.

[Measurement of interfacial resistance]

The interfacial resistance of the battery of Example 1 was measured in the following manner.

First, the battery of Example 1 was placed in a constant-temperature chamber at 25°C. The battery was charged to a quantity of electricity of 100 mAh (100 mAh/g) per gram of the positive electrode active material at a constant current. The charged battery was subjected to an AC impedance analysis. In this case, the voltage amplitude was $\pm 10$ mV, and the frequency was $10^7$ Hz to $10^{-2}$ Hz. A high-performance electrochemical measurement system (VSP-300) manufactured by Bio-Logic Science Instruments was used for the measurement. A semicircular-arc-shaped waveform in the resulting Nyquist diagram was attributed to an interfacial resistance and a resistance of In being the negative electrode, and a fitting analysis was performed to calculate an interfacial resistance value.

[Measurement of amount of heat generation]

A heat generation test was performed using the charged positive electrode mixture in the following manner.

First, the charged positive electrode mixture, $Li_3YCl_6$, and $Li_2S-P_2S_5$ were weighed in an argon glove box. The volume proportion of the positive electrode active material, $Li_3YCl_6$, and $Li_2S-P_2S_5$ included in the charged positive electrode mixture was 70.0: 10.6: 19.4. These were mixed in an agate mortar. In this mixture, the proportion x of the volume of the second solid electrolyte ($Li_3YCl_6$) to the sum of the volume of the first solid electrolyte ($Li_2S-P_2S_5$) and the volume of the second solid electrolyte was 35.2 vol%. Next, the resulting powder was sealed in a hermetic pan made of SUS. The amount of heat generation of the powder was measured using a differential scanning calorimeter (DSC-6200 manufactured by Seiko Instruments Inc.). In this case, the temperature increase rate was 10°C/min. The scanning temperature range was from ordinary temperature (20°C) to 500°C. The obtained amount of heat generation was divided by the weight of the powder to calculate an amount of heat generation (mJ/mg) per unit weight.

<Example 2>

A battery of Example 2 was produced and measured for its amount of heat generation in the same manner as in Example 1, except that in production of a positive electrode and measurement of the amount of heat generation, the volume proportion of the positive electrode active material, $Li_3YCl_6$, and $Li_2S-P_2S_5$ was changed to 70.0: 16.5: 13.5. Furthermore, the interfacial resistance of the battery of Example 2 was measured in the same manner as in Example 1. In the positive electrode used in Example 2, the proportion x of the volume of the second solid electrolyte ($Li_3YCl_6$) to the sum of the volume of the first solid electrolyte ($Li_2S-P_2S_5$) and the volume of the second solid electrolyte was 55.0 vol%.

<Example 3>

A battery of Example 3 was produced and measured for its amount of heat generation in the same manner as in Example 1, except that in production of a positive electrode material and measurement of the amount of heat generation, the volume proportion of the positive electrode active material, $Li_3YCl_6$, and $Li_2S-P_2S_5$ was changed to 70.0: 23.0: 7.0. Furthermore, the interfacial resistance of the battery of Example 3 was measured in the same manner as in Example 1. In the positive electrode material used in Example 3, the proportion x of the volume of the second solid electrolyte ($Li_3YCl_6$) to the sum of the volume of the first solid electrolyte ($Li_2S-P_2S_5$) and the volume of the second solid electrolyte was 76.5 vol%.

<Comparative Example 1>

A battery of Comparative Example 1 was produced and measured for its amount of heat generation in the same manner as in Example 1, except that in production of a positive electrode material and measurement of the amount of heat generation, the volume proportion of the positive electrode active material, $Li_3YCl_6$, and $Li_2S-P_2S_5$ was changed

to 70.0: 0: 30.0. Furthermore, the interfacial resistance of the battery of Comparative Example 1 was measured in the same manner as in Example 1. In the positive electrode material used in Comparative Example 1, the proportion x of the volume of the second solid electrolyte ($Li_3YCl_6$) to the sum of the volume of the first solid electrolyte ($Li_2S$-$P_2S_5$) and the volume of the second solid electrolyte was 0 vol%.

<Comparative Example 2>

A battery of Comparative Example 2 was produced and measured for its amount of heat generation in the same manner as in Example 1, except that in production of a positive electrode material and measurement of the amount of heat generation, the volume proportion of the positive electrode active material, $Li_3YCl_6$, and $Li_2S$-$P_2S_5$ was changed to 70.0: 5.1: 24.9. Furthermore, the interfacial resistance of the battery of Comparative Example 2 was measured in the same manner as in Example 1. In the positive electrode material used in Comparative Example 2, the proportion x of the volume of the second solid electrolyte ($Li_3YCl_6$) to the sum of the volume of the first solid electrolyte ($Li_2S$-$P_2S_5$) and the volume of the second solid electrolyte was 16.9 vol%.

<Comparative Example 3>

A battery of Comparative Example 3 was produced and measured for its amount of heat generation in the same manner as in Example 1, except that in production of a positive electrode material and measurement of the amount of heat generation, the volume proportion of the positive electrode active material, $Li_3YCl_6$, and $Li_2S$-$P_2S_5$ was changed to 70.0: 30.0: 0. In the positive electrode material used in Comparative Example 3, the proportion x of the volume of the second solid electrolyte ($Li_3YCl_6$) to the sum of the volume of the first solid electrolyte ($Li_2S$-$P_2S_5$) and the volume of the second solid electrolyte was 100 vol%.

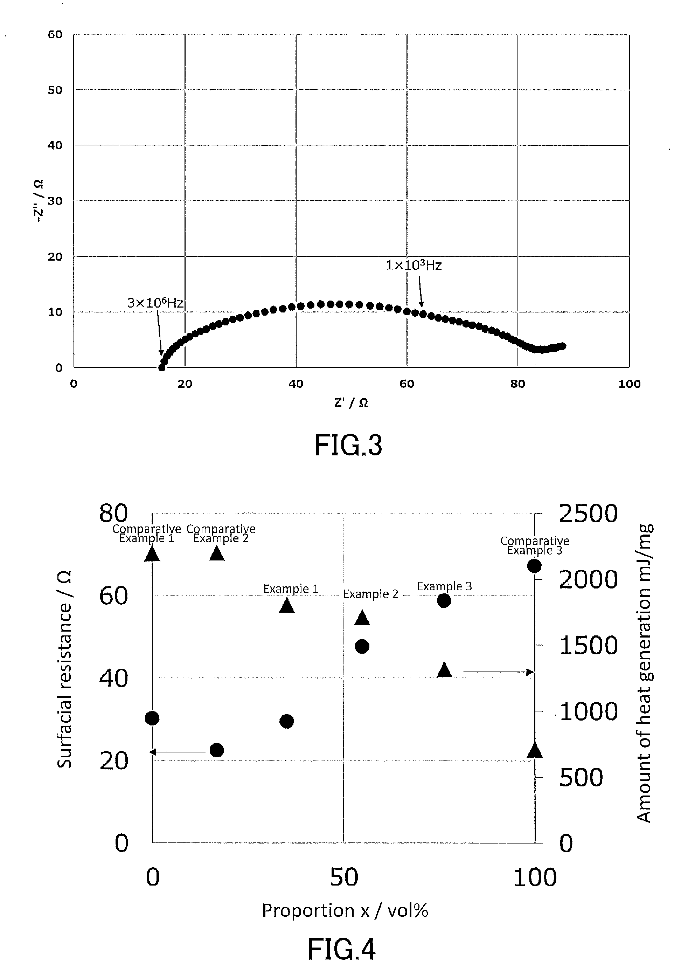

Additionally, the battery of Comparative Example 3 was subjected to an AC impedance analysis in the same manner as in Example 1. FIG. 3 shows a Nyquist diagram obtained by subjecting the battery of Comparative Example 3 to the AC impedance analysis. In Comparative Example 3, frequency responses from $3 \times 10^6$ Hz to $1 \times 10^3$ Hz were attributed to an interfacial resistance, and a fitting analysis was performed to calculate an interfacial resistance value.

Table 1 shows the results of measuring the interfacial resistance and the amount of heat generation in Examples 1 to 3 and Comparative Examples 1 to 3. FIG. 4 is a graph showing a relation between the proportion x, the interfacial resistance, and the amount of heat generation of each of Examples and Comparative Examples. In FIG. 4, circles represent the interfacial resistances. Triangles represent the amounts of heat generation.

[Table 1]

| | Proportion x (vol%) | Interfacial resistance ($\Omega$) | Amount of heat generation (mJ/mg) |
|---|---|---|---|
| Example 1 | 35.2 | 29.5 | 1806 |
| Example 2 | 55.0 | 47.6 | 1712 |
| Example 3 | 76.5 | 58.8 | 1316 |
| Comparative Example 1 | 0 | 30.2 | 2194 |
| Comparative Example 2 | 16.9 | 22.5 | 2200 |
| Comparative Example 3 | 100 | 67.2 | 711 |

<Discussion>

As can be understood from Table 1 and FIG. 4, the value of the interfacial resistance tends to increase as the proportion x of the volume of the second solid electrolyte ($Li_3YCl_6$) to the sum of the volume of the first solid electrolyte ($Li_2S$-$P_2S_5$) and the volume of the second solid electrolyte increases. That is, it is understood that increasing the volume proportion of the sulfide solid electrolyte and decreasing the volume proportion of the halide solid electrolyte can achieve a lower interfacial resistance. The sulfide solid electrolyte has a lower Young's modulus and more easily changes its shape than the halide solid electrolyte. Therefore, it is inferred that for the batteries of Examples 1 to 3 having a proportion x of 95 vol% or less, the low interfacial resistances were achieved by the positive electrode active material and the sulfide solid electrolyte closely joined together.

As can be understood from Table 1 and FIG. 4, the amount of heat generation tends to decrease as the proportion x of the volume of the second solid electrolyte ($Li_3YCl_6$) to the sum of the volume of the first solid electrolyte ($Li_2S$-$P_2S_5$) and the volume of the second solid electrolyte increases. That is, increasing the volume proportion of the halide solid electrolyte can achieve a higher thermal stability of the positive electrode including the positive electrode material. Compared to the sulfide solid electrolyte, the halide solid electrolyte not only has an excellent thermal stability by itself but also is poorly reactive with oxygen and generates a small amount of heat by an oxidation reaction. This is thought to be the reason why the high thermal stability of the positive electrode was achieved in the batteries of Examples 1 to 3 having a proportion x of 20 vol% or more.

From the above, it has been ascertained that it is possible to achieve a positive electrode having both a high thermal stability and a low interfacial resistance when the positive electrode material includes the positive electrode active material, the first solid electrolyte including the sulfide solid electrolyte, and the second solid electrolyte including the halide solid electrolyte and the proportion x of the volume of the second solid electrolyte to the sum of the volume of the first solid electrolyte and the volume of the second solid electrolyte satisfies $20 \leq x \leq 95$ in percentage. In particular, when the proportion x satisfies $35.2 \leq x \leq 76.5$ in percentage, it is possible to sufficiently increase the thermal stability of the positive electrode and sufficiently decrease the interfacial resistance thereof.

INDUSTRIAL APPLICABILITY

The positive electrode material of the present disclosure can be used, for example, for all-solid-state lithium secondary batteries.

**Claims**

1. A positive electrode material comprising:

   a positive electrode active material;
   a first solid electrolyte including a sulfide solid electrolyte; and
   a second solid electrolyte including a halide solid electrolyte, wherein
   a proportion x of a volume of the second solid electrolyte to a sum of a volume of the first solid electrolyte and the volume of the second solid electrolyte satisfies $20 \leq x \leq 95$ in percentage.

2. The positive electrode material according to claim 1, wherein the ratio x satisfies $35.2 \leq x \leq 76.5$ in percentage.

3. The positive electrode material according to claim 1 or 2, wherein the halide solid electrolyte is represented by the following composition formula (1):

$$Li_{\alpha}M_{\beta}X_{\gamma} \ldots \qquad \text{Formula (1)},$$

   where symbols $\alpha$, $\beta$, and $\gamma$ are each a value greater than 0, a symbol M includes at least one selected from the group consisting of a metal element other than Li and a metalloid element, and a symbol X includes at least one selected from the group consisting of F, Cl, Br, and I.

4. The positive electrode material according to claim 3, wherein the symbol M includes yttrium.

5. The positive electrode material according to claim 3 or 4, wherein the symbols $\alpha$, $\beta$, and $\gamma$ satisfy $2.5 \leq \alpha \leq 3$, $1 \leq \beta \leq 1.1$, and $\gamma = 6$.

6. The positive electrode material according to any one of claims 1 to 5, wherein the positive electrode active material includes a lithium-containing transition metal composite oxide.

7. The positive electrode material according to any one of claims 1 to 6, wherein the positive electrode active material includes lithium nickel cobalt manganese oxide.

8. A battery, comprising:

   a positive electrode including the positive electrode material according to any one of claims 1 to 7;
   a negative electrode; and
   an electrolyte layer disposed between the positive electrode and the negative electrode.

9. The battery according to claim 8, wherein the electrolyte layer includes the same material as a material of the second solid electrolyte.

10. The battery according to claim 8 or 9, wherein the electrolyte layer includes a halide solid electrolyte different from the halide solid electrolyte included in the second solid electrolyte.

11. The battery according to any one of claims 8 to 10, wherein the electrolyte layer includes a sulfide solid electrolyte.

1000

FIG.1

2000

FIG.2

FIG.3

FIG.4

## INTERNATIONAL SEARCH REPORT

| International application No. |
|---|
| PCT/JP2021/001901 |

### A. CLASSIFICATION OF SUBJECT MATTER

H01M 4/131(2010.01)i; H01M 4/505(2010.01)i; H01M 4/525(2010.01)i; H01M 4/62(2006.01)i; H01M 10/052(2010.01)i; H01M 10/0562(2010.01)i
FI: H01M4/131; H01M4/62 Z; H01M4/505; H01M4/525; H01M10/052; H01M10/0562

According to International Patent Classification (IPC) or to both national classification and IPC

### B. FIELDS SEARCHED

Minimum documentation searched (classification system followed by classification symbols)
H01M4/131; H01M4/505; H01M4/525; H01M4/62; H01M10/052; H01M10/0562

Documentation searched other than minimum documentation to the extent that such documents are included in the fields searched

| | |
|---|---|
| Published examined utility model applications of Japan | 1922–1996 |
| Published unexamined utility model applications of Japan | 1971–2021 |
| Registered utility model specifications of Japan | 1996–2021 |
| Published registered utility model applications of Japan | 1994–2021 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | WO 2019/146308 A1 (PANASONIC IP MANAGEMENT CO., LTD.) 01 August 2019 (2019-08-01) claims, paragraphs [0019], [0057], [0063], [0116], table 1 | 1–11 |
| A | WO 2019/135323 A1 (PANASONIC IP MANAGEMENT CO., LTD.) 11 July 2019 (2019-07-11) claim 10, paragraphs [0017], [0110], examples 1, 3 | 1–11 |
| A | WO 2019/135322 A1 (PANASONIC IP MANAGEMENT CO., LTD.) 11 July 2019 (2019-07-11) claims | 1–11 |

☐ Further documents are listed in the continuation of Box C.   ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 23 March 2021 (23.03.2021) | 06 April 2021 (06.04.2021) |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

**INTERNATIONAL SEARCH REPORT**
Information on patent family members

| International application No. |
| --- |
| PCT/JP2021/001901 |

| Patent Documents referred in the Report | Publication Date | Patent Family | Publication Date |
| --- | --- | --- | --- |
| WO 2019/146308 A1 | 01 Aug. 2019 | CN 111201643 A | |
| WO 2019/135323 A1 | 11 Jul. 2019 | US 2020/0212481 A1 claims, paragraph [0018], examples CN 111295789 A | |
| WO 2019/135322 A1 | 11 Jul. 2019 | (Family: none) | |

Form PCT/ISA/210 (patent family annex) (January 2015)

**EP 4 102 594 A1**

**Patent documents cited in the description**

- WO 2007004590 A1
- WO 2018025582 A1